# EUROPEAN PATENT APPLICATION

(11) **EP 4 545 169 A1**
(43) Date of publication of application: **30.04.2025**
(21) Application number: 23831369.6
(22) Date of filing: 26.06.2023
(51) Int. Cl.: B01D 53/04, B01D 53/14, B01J 20/04, B01J 20/18, B01J 20/20, B01J 20/22, B01J 20/26, B01J 20/28, B01J 20/32, B01J 20/34

(54) **REGENERATION METHOD FOR ACID-GAS ADSORPTION DEVICE, MANUFACTURING METHOD FOR ACID-GAS ADSORPTION DEVICE, AND OPERATING METHOD FOR ACID-GAS ADSORPTION DEVICE**

(30) Priority: 27.06.2022 JP 2022102587; 30.11.2022 JP 2022190912
(71) Applicant: NGK Insulators, Ltd., Nagoya-shi, Aichi 467-8530 (JP)
(72) Inventor: OKUMA, Yusuke, Nagoya-shi, Aichi 467-8530 (JP); SHIBAGAKI, Yukinari, Nagoya-shi, Aichi 467-8530 (JP); KAN, Hirofumi, Nagoya-shi, Aichi 467-8530 (JP); IIDA, Kazuki, Nagoya-shi, Aichi 467-8530 (JP); TORII, Atsushi, Nagoya-shi, Aichi 467-8530 (JP); NAKAGAWA, Kosuke, Nagoya-shi, Aichi 467-8530 (JP)
(74) Representative: MERH-IP Matias Erny Reichl Hoffmann Patentanwälte PartG mbB
(86) International application number: PCT/JP2023/023535
(87) International publication number: WO 2024/004928

(57) **Abstract**

Provided are a method of regenerating an acid gas adsorption device and a method of operating an acid gas adsorption device each capable of smoothly recovering acid gas capture performance and achieving a reduction in running cost, and a method of producing an acid gas adsorption device capable of producing an acid gas adsorption device having excellent acid gas capture performance. The method of regenerating an acid gas adsorption device according to an embodiment of the present invention includes the steps of: causing an acid gas to be adsorbed to an acid gas adsorption material by supplying the acid gas to an acid gas adsorption device so that the acid gas is brought into contact with an acid gas adsorption layer; causing the acid gas to be desorbed from the acid gas adsorption material; and causing an acid gas adsorption material to adhere to the acid gas adsorption layer of the acid gas adsorption device, which has been subjected to the step of causing the acid gas to be adsorbed and the step of causing the acid gas to be desorbed, by supplying the acid gas adsorption material thereto.

## Description

### Technical Field

The present invention relates to a method of regenerating an acid gas adsorption device, a method of producing an acid gas adsorption device, and a method of operating an acid gas adsorption device.

### Background Art

In recent years, an attempt has been made to separate and capture an acid gas in the atmosphere in order to reduce an environmental load. Such acid gas is, for example, carbon dioxide (hereinafter sometimes referred to as "CO₂"), which is a main cause of global warming. As a typical example of such attempt, a Carbon dioxide Capture, Utilization and Storage (CCUS) cycle has been known. As a carbon dioxide adsorption device to be used for such separation and capture of carbon dioxide, there has been proposed an absorbent structure for CO₂ capture including: a honeycomb substrate having a plurality of partition walls thereby forming a plurality of flow channels; and a functional mer group positioned in and on the partition walls (see, for example, Patent Literature 1). With such absorbent structure for CO₂ capture, CO₂ can be captured from a gas fluid flowing in the absorbent structure, and CO₂ having been captured can be desorbed therefrom under predetermined conditions. However, when CO₂ in the atmosphere is repeatedly adsorbed and desorbed with the absorbent structure for CO₂ capture described in Patent Literature 1, a CO₂ capture rate may be gradually reduced owing to impurities in the atmosphere and repetition of heat treatment. In this case, it is required that the entirety of the absorbent structure for CO₂ capture be replaced, resulting in a problem of an increase in running cost.

### Citation List

### Patent Literature

[PTL 1] WO 2013/119929 A1

### Summary of Invention

### Technical Problem

A primary object of the present invention is to provide a method of regenerating an acid gas adsorption device and a method of operating an acid gas adsorption device each capable of smoothly recovering acid gas capture performance and achieving a reduction in running cost, and a method of producing an acid gas adsorption device capable of producing an acid gas adsorption device having excellent acid gas capture performance.

### Solution to Problem

[1] According to one embodiment of the present invention, there is provided a method of regenerating an acid gas adsorption device, including the steps of: causing an acid gas to be adsorbed to an acid gas adsorption material by supplying the acid gas to an acid gas adsorption device including a base material, and an acid gas adsorption layer arranged on a surface of the base material, the acid gas adsorption layer including the acid gas adsorption material, so that the acid gas is brought into contact with the acid gas adsorption layer; causing the acid gas to be desorbed from the acid gas adsorption material; and causing an acid gas adsorption material to adhere to the acid gas adsorption layer of the acid gas adsorption device, which has been subjected to the step of causing the acid gas to be adsorbed and the step of causing the acid gas to be desorbed, by supplying the acid gas adsorption material thereto.
[2] In the method of regenerating an acid gas adsorption device according to the above-mentioned item [1], the acid gas may be carbon dioxide.
[3] In the method of regenerating an acid gas adsorption device according to the above-mentioned item [1] or [2], the base material may be a honeycomb-like base material including a partition wall configured to define a plurality of cells, and the acid gas adsorption layer may be formed on a surface of the partition wall.
[4] In the method of regenerating an acid gas adsorption device according to any one of the above-mentioned items [1] to [3], a material for forming the base material is selected from cordierite, alumina, mullite, silicon carbide, a silicon-silicon carbide-based composite material, silicon nitride, and a combination thereof.
[5] In the method of regenerating an acid gas adsorption device according to any one of the above-mentioned items [1] to [4], the acid gas adsorption material is selected from a nitrogen-containing compound, a metal organic framework, activated carbon, nitrogen-doped carbon, an alkali compound, a carbonate salt, a hydrogen carbonate salt, zeolite, an ionic liquid, and a combination thereof.
[6] In the method of regenerating an acid gas adsorption device according to any one of the above-mentioned items [1] to [5], the acid gas adsorption layer may further include a porous carrier.
[7] In the method of regenerating an acid gas adsorption device according to any one of the above-mentioned items [1] to [6], the acid gas adsorption layer may include: particles each including at least the acid gas adsorption material; and an organic binder capable of binding the particles. The organic binder may be soluble in an aprotic polar solvent and substantially insoluble in a protic polar solvent. The step of causing the acid gas adsorption material to adhere to the acid gas adsorption layer by supplying the acid gas adsorption material thereto may include supplying the particles each including at least the acid gas adsorption material to the acid gas adsorption layer.
[8] According to another aspect of the present invention, there is provided a method of producing an acid gas adsorption device, including the steps of: causing an acid gas to be adsorbed to an acid gas adsorption material by supplying the acid gas to an acid gas adsorption device including a base material, and an acid gas adsorption layer arranged on a surface of the base material, the acid gas adsorption layer including the acid gas adsorption material, so that the acid gas is brought into contact with the acid gas adsorption layer; causing the acid gas to be desorbed from the acid gas adsorption material; and causing an acid gas adsorption material to adhere to the acid gas adsorption layer of the acid gas adsorption device, which has been subjected to the step of causing the acid gas to be adsorbed and the step of causing the acid gas to be desorbed, by supplying the acid gas adsorption material thereto.
[9] According to still another aspect of the present invention, there is provided a method of operating an acid gas adsorption device, including the steps of: causing an acid gas to be adsorbed to an acid gas adsorption material by supplying the acid gas to an acid gas adsorption device including a base material, and an acid gas adsorption layer arranged on a surface of the base material, the acid gas adsorption layer including the acid gas adsorption material, so that the acid gas is brought into contact with the acid gas adsorption layer; and causing the acid gas to be desorbed from the acid gas adsorption material, wherein the step of causing the acid gas to be adsorbed to the acid gas adsorption material includes causing an acid gas adsorption material to adhere to the acid gas adsorption layer by supplying the acid gas adsorption material thereto together with the acid gas.

### Advantageous Effects of Invention

According to the embodiments of the present invention, the method of regenerating an acid gas adsorption device and the method of operating an acid gas adsorption device each capable of smoothly recovering acid gas capture performance and achieving a reduction in running cost, and the method of producing an acid gas adsorption device capable of producing an acid gas adsorption device having excellent acid gas capture performance can be achieved.

### Brief Description of Drawings

FIG. 1 is a schematic perspective view of a carbon dioxide adsorption device according to one embodiment of the present invention.
FIG. 2 is a schematic sectional view of the carbon dioxide adsorption device of FIG. 1.

### Description of Embodiments

Embodiments of the present invention are described below with reference to the drawings. However, the present invention is not limited to these embodiments.

### A. Overview of Method of regenerating Acid Gas Adsorption Device

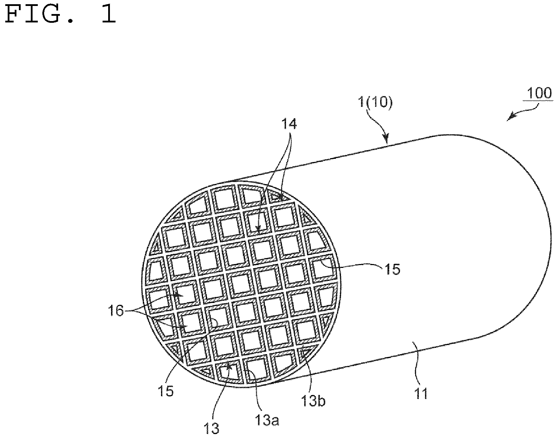

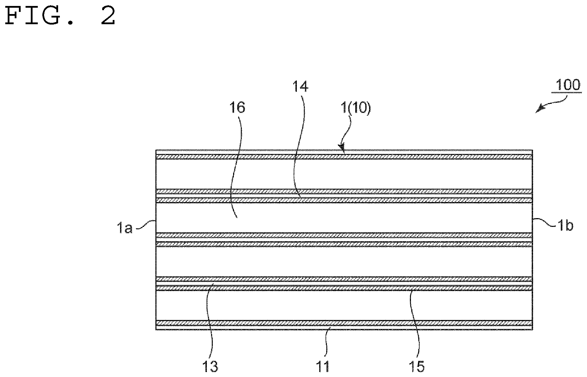

FIG. 1 is a schematic perspective view of a carbon dioxide adsorption device according to one embodiment of the present invention, and FIG. 2 is a schematic sectional view of the carbon dioxide adsorption device of FIG. 1.

A method of regenerating an acid gas adsorption device according to one embodiment of the present invention includes the steps of: causing an acid gas to be adsorbed to an acid gas adsorption material by supplying the acid gas to an acid gas adsorption device **100** including a base material **1,** and an acid gas adsorption layer **15** arranged on a surface of the base material **1,** the acid gas adsorption layer **15** including the acid gas adsorption material, so that the acid gas is brought into contact with the acid gas adsorption layer **15** (adsorption step); causing the acid gas to be desorbed from the acid gas adsorption material (desorption step); and causing an acid gas adsorption material to adhere to the acid gas adsorption layer **15** of the acid gas adsorption device **100,** which has been subjected to the adsorption step and the desorption step, by supplying the acid gas adsorption material thereto (adhesion step).

The inventors of the present invention have found that the lifetime of the base material is longer than the lifetime of the acid gas adsorption material, and thus completed the present invention. More specifically, a fresh acid gas adsorption material is supplied to the acid gas adsorption layer of the acid gas adsorption device, which has been subjected to the adsorption step and the desorption step, to be caused to adhere thereto. Thus, even when the acid gas capture performance of the acid gas adsorption layer is reduced in the adsorption step and the desorption step, the acid gas capture performance of the acid gas adsorption layer can be smoothly recovered through the adhesion step. As a result, the base material can be reused, and hence a reduction in running cost can be achieved.

Examples of the acid gas include carbon dioxide (CO₂), hydrogen sulfide, sulfur dioxide, nitrogen dioxide, and hydrogen chloride.

In one embodiment, the acid gas is carbon dioxide (CO₂). In this embodiment, the acid gas adsorption device **100** is a carbon dioxide adsorption device **100,** the acid gas adsorption layer **15** is a carbon dioxide adsorption layer **15,** and the acid gas adsorption material is a carbon dioxide adsorption material. The carbon dioxide adsorption device **100** serving as one embodiment of the acid gas adsorption device is described in detail below.

### B. Carbon Dioxide Adsorption Device

As described above, the carbon dioxide adsorption device **100** includes the base material **1** and the carbon dioxide adsorption layer **15.** The structure of the base material **1** is not particularly limited, and is, for example, a honeycomb-like structure, a filter structure such as a filtration cloth, or a pellet structure. The carbon dioxide adsorption layer **15** is not particularly limited as long as the layer is arranged on the surface of any such base material **1.**

### B-1. Base Material (Honeycomb-like Base Material)

In one embodiment, the base material **1** is a honeycomb-like base material **10** including a plurality of cells **14.**

The cells **14** each extend from a first end surface **1a** (inflow end surface) of the honeycomb-like base material **10** to a second end surface **1b** (outflow end surface) thereof in a length direction (axial direction) of the honeycomb-like base material **10** (see FIG. **2**). The cells **14** each have any appropriate shape in a cross section in a direction perpendicular to the length direction of the honeycomb-like base material **10.** The sectional shapes of the cells are each, for example, a triangle, a quadrangle, a pentagon, a hexagon, a higher polygon, a circle, or an ellipse. The sectional shapes and sizes of the cells may be all the same, or may be at least partly different. Of such sectional shapes of the cells, a hexagon or a quadrangle is preferred, and a square, a rectangle, or a hexagon is more preferred.

A cell density in a cross section in the direction perpendicular to the length direction of the honeycomb-like base material (specifically, the number of the cells **14** per unit area) may be appropriately set depending on the purposes. The cell density may be, for example, from 4 cells/cm² to 320 cells/cm². When the cell density falls within such range, the strength and effective geometric surface area (GSA) of the honeycomb-like base material can be sufficiently ensured.

The honeycomb-like base material **10** has any appropriate shape (overall shape). The shape of the honeycomb-like base material is, for example, a cylinder with a circle as its bottom, an elliptic cylinder with an ellipse as its bottom, a prismatic column with a polygon as its bottom, or a column with an indefinite shape as its bottom. The honeycomb-like base material **10** of the illustrated example has a cylindrical shape. The outer diameter and length of the honeycomb-like base material may be appropriately set depending on the purposes. Although not shown, the honeycomb-like base material may have a hollow area in a center portion thereof in the cross section in the direction perpendicular to the length direction.

The honeycomb-like base material **10** typically includes: an outer peripheral wall **11;** and a partition wall **13** positioned inside the outer peripheral wall **11.** In the illustrated example, the outer peripheral wall **11** and the partition wall **13** are integrally formed. The outer peripheral wall **11** and the partition wall **13** may be separate bodies.

The outer peripheral wall **11** has a cylindrical shape. The thickness of the outer peripheral wall **11** may be set to any appropriate thickness. The thickness of the outer peripheral wall **11** is, for example, from 0.1 mm to 10 mm.

The partition wall **13** defines the plurality of cells **14.** More specifically, the partition wall **13** has a first partition wall **13a** and a second partition wall **13b** perpendicular to each other, and the first partition wall **13a** and the second partition wall **13b** define the plurality of cells **14.** The sectional shapes of the cells **14** are each a quadrangle except for a portion in which the first partition wall **13a** and the second partition wall **13b** are each brought into contact with the outer peripheral wall **11.** The configuration of the partition wall is not limited to the partition wall **13** described above. The partition wall may have a first partition wall extending in a radial direction and a second partition wall extending in a circumferential direction, which define a plurality of cells.

The thickness of the partition wall **13** may be appropriately set depending on the applications of the honeycomb-like base material. The thickness of the partition wall **13** is typically smaller than the thickness of the outer peripheral wall **11.** The thickness of the partition wall **13** is, for example, from 0.03 mm to 0.6 mm. The thickness of the partition wall is measured, for example, through sectional observation with a scanning electron microscope (SEM). When the thickness of the partition wall falls within such range, the honeycomb-like base material can achieve sufficient mechanical strength, and can also achieve a sufficient opening area (total area of the cells in a cross section).

The porosity of the partition wall **13** may be appropriately set depending on the purposes. The porosity of the partition wall **13** is, for example, 15% or more, preferably 20% or more, and is, for example, 70% or less, preferably 45% or less. The porosity may be measured, for example, by mercury porosimetry.

The density of the partition wall **13** may be appropriately set depending on the purposes. The density is, for example, 1.7 g/cm³ or more, preferably 1.8 g/cm³ or more, and is, for example, 2.8 g/cm³ or less, preferably 2.6 g/cm³ or less. The density may be measured, for example, by mercury porosimetry.

A material for forming the partition wall **13** is typically, for example, a ceramic. Examples of the ceramic include silicon carbide, a silicon-silicon carbide-based composite material, cordierite, mullite, alumina, silicon nitride, spinel, a silicon carbide-cordierite-based composite material, lithium aluminum silicate, and aluminum titanate. Those materials for forming the partition walls may be used alone or in combination thereof. Of those materials for forming the partition walls, cordierite, alumina, mullite, silicon carbide, a silicon-silicon carbide-based composite material, and silicon nitride are preferred, and silicon carbide and a silicon-silicon carbide-based composite material are more preferred.

Such honeycomb-like base material **10** is typically produced by the following method. First, a binder and water or an organic solvent are added to material powder including ceramic powder described above as required. The resultant mixture is kneaded to provide a body, and the body is molded (typically extruded) into a desired shape. After that, the body is dried, and is fired as required. Thus, the honeycomb-like base material 10 is produced. When the firing is adopted, the body is fired at, for example, from 1,200°C to 1,500°C. A firing time period is, for example, 1 hour or more and 20 hours or less.

### B-2. Carbon Dioxide Adsorption Layer

In one embodiment, the carbon dioxide adsorption layer **15** is formed on the surface of the partition wall **13.** In the honeycomb-like base material **10,** a gas flow passage **16** is formed in a portion (typically, a center portion) in a cross section of the cell **14** in which the carbon dioxide adsorption layer **15** is not formed. The carbon dioxide adsorption layer **15** may be formed on the entire inner surface of the partition wall **13** (specifically, so as to surround the gas flow passage **16**) as in the illustrated example, or may be formed on part of the surface of the partition wall. When the carbon dioxide adsorption layer **15** is formed on the entire inner surface of the partition wall **13,** CO₂ removal efficiency can be improved.

The gas flow passage **16** extends from the first end surface **1a** (inflow end surface) to the second end surface **1b** (outflow end surface) as with the cells **14.** Examples of the sectional shape of the gas flow passage **16** include the same sectional shapes as those of the cells **14** described above. Of those, a hexagon or a quadrangle is preferred, and a square, a rectangle, or a hexagon is more preferred. The sectional shapes and sizes of the respective gas flow passages **16** may be all the same, or may be at least partly different.

The thickness of the carbon dioxide adsorption layer **15** is not particularly limited, but is, for example, 10 µm or more, preferably 50 µm or more, and is, for example, 1,000 µm or less, preferably 500 µm or less.

### B-2-1. Carbon Dioxide Adsorption Layer formed of Carbon Dioxide Adsorption Material

The carbon dioxide adsorption layer **15** includes the carbon dioxide adsorption material serving as an example of the acid gas adsorption material. In one embodiment, the carbon dioxide adsorption layer is formed of the carbon dioxide adsorption material, and is directly supported by the partition wall to face the gas flow passage.

Any appropriate compound capable of adsorbing and desorbing CO₂ may be adopted as the carbon dioxide adsorption material. Examples of the carbon dioxide adsorption material include: nitrogen-containing compounds described later; alkali compounds, such as sodium hydroxide and potassium hydroxide; carbonate salts, such as calcium carbonate and potassium carbonate; hydrogen carbonate salts, such as calcium hydrogen carbonate and potassium hydrogen carbonate; metal organic flameworks (MOF), such as MOF-74, MOF-200, and MOF-210; zeolite; activated carbon; nitrogen-doped carbon; and an ionic liquid.

Of those carbon dioxide adsorption materials, a nitrogen-containing compound is more preferred. More specific examples of the nitrogen-containing compound include: amine compounds, such as monoethanolamine, diethanolamine, triethanolamine, N-(3-aminopropyl)diethanolamine, aminopropyltrimethoxysilane, polyvinylamine, methyldiethylamine, and tetraethylenepentamine; piperazine compounds such as 1-(2-hydroxyethyl) piperazine; aminosilane coupling agents, such as polyethylenimine-trimethoxysilane, aminopropyltrimethoxysilane, 3-aminopropyltriethoxysilane, and N-(2-aminoethyl)-3-aminopropyl-trimethoxysilane; organic polymers having a primary amino group to a tertiary amino group, such as polyethylenimine, polyamidoamine, and polystyrene to which an amino group is added; organic monomers having a primary amino group to a tertiary amino group, such as ethylenimine and styrene to which an amino group is added; and organic/inorganic compounds to each of which an amino group is added as a substituent. Those carbon dioxide adsorption materials may be used alone or in combination thereof.

In this embodiment, the carbon dioxide adsorption layer is substantially free of any component other than the carbon dioxide adsorption material. When the carbon dioxide adsorption layer is formed of the carbon dioxide adsorption material, the content ratio of the carbon dioxide adsorption material in the carbon dioxide adsorption layer is typically 95.0 mass% or more and 100 mass% or less. When the content ratio of the carbon dioxide adsorption material falls within the above-mentioned range, an excellent CO₂ capture rate can be stably ensured.

The carbon dioxide adsorption layer formed of the carbon dioxide adsorption material is typically produced by the following method. First, a solution of the carbon dioxide adsorption material in which the above-mentioned carbon dioxide adsorption material is dissolved in a solvent is prepared. Examples of the solvent include water, alcohols, and diols. Those solvents may be used alone or in combination thereof. Of those solvents, a water-based solvent (water or a mixed solvent containing water) is preferred. Next, the solution of the carbon dioxide adsorption material is applied onto the base material (specifically, the partition wall), and the coating film is then dried, and is sintered as required. Thus, the carbon dioxide adsorption layer formed of the carbon dioxide adsorption material is formed.

### B-2-2. Carbon Dioxide Adsorption Layer including Ionic Liquid and Carbon Dioxide Adsorption Material except Ionic Liquid

The carbon dioxide adsorption layer may include an ionic liquid. In this case, the carbon dioxide adsorption layer preferably includes an ionic liquid and a carbon dioxide adsorption material except the ionic liquid (hereinafter referred to as "other carbon dioxide adsorption material"). The other carbon dioxide adsorption material (e.g., a nitrogen-containing compound) is typically coated with the ionic liquid. When the carbon dioxide adsorption layer includes the ionic liquid, an improvement in performance of the carbon dioxide adsorption material and an increase in lifetime thereof can be achieved.

The ionic liquid is a "salt" of a liquid formed only of an ion (an anion or a cation), and is in a liquid state under normal temperature and normal pressure (23°C, 0.1 MPa). Examples of the cation of the ionic liquid include: ammonium-based ions, such as imidazolium salts or pyridinium salts; phosphonium-based ions; sulfonium salts; and inorganic ions. Examples of the anion of the ionic liquid include: halogen-based anions, such as a bromide ion and a triflate; boron-based anions such as a tetraphenylborate; phosphorus-based anions such as a hexafluorophosphate; and sulfur-based anions such as an alkyl sulfonate. Such ionic liquids may be used alone or in combination thereof. Of the ionic liquids, a combination of an imidazolium salt serving as the cation and a triflate serving as the anion is preferred.

When the carbon dioxide adsorption layer includes the ionic liquid and the other carbon dioxide adsorption material in combination, the content ratio of the total of the ionic liquid and the other carbon dioxide adsorption material (that is, the total of the carbon dioxide adsorption materials) in the carbon dioxide adsorption layer is, for example, 30 mass% or more, preferably 50 mass% or more, and is, for example, 100 mass% or less, preferably 99 mass% or less.

In this embodiment, the content ratio of the ionic liquid is, for example, 0.000001 part by mass or more, preferably 0.00001 part by mass or more, and is, for example, 0.1 part by mass or less, preferably 0.05 part by mass or less with respect to 1 part by mass of the other carbon dioxide adsorption material. When the content ratio of the ionic liquid falls within the above-mentioned ranges, an improvement in performance of the carbon dioxide adsorption material and an increase in lifetime thereof can be stably achieved.

### B-2-3. Carbon Dioxide Adsorption Layer including Carbon Dioxide Adsorption Material and Porous Body

In one embodiment, the carbon dioxide adsorption layer further includes a porous carrier in addition to the above-mentioned carbon dioxide adsorption material. In this case, the carbon dioxide adsorption material is typically supported by the porous carrier to face the gas flow passage. When the carbon dioxide adsorption layer includes the porous carrier, a fresh carbon dioxide adsorption material can be stably caused to adhere to the carbon dioxide adsorption layer (specifically, the porous carrier) in the adhesion step.

The porous carrier may form mesopores in the carbon dioxide adsorption layer. Examples of the porous carrier include: metal organic frameworks (MOF), such as MOF-74, MOF-200, and MOF-210; activated carbon; nitrogen-doped carbon; mesoporous silica; mesoporous alumina; zeolite; and a carbon nanotube. Of those, metal organic frameworks (MOF), activated carbon, zeolite, mesoporous silica, and mesoporous alumina are preferred. Those porous carriers may be used alone or in combination thereof. Of those, a material different from the carbon dioxide adsorption material is preferably adopted as the porous carrier.

The BET specific surface area of the porous carrier is, for example, 50 m²/g or more, preferably 500 m²/g or more. When the surface area of the porous carrier is equal to or more than the above-mentioned lower limits, the carbon dioxide adsorption material can be stably supported, and hence an increase in CO₂ capture rate can be achieved. The upper limit of the BET specific surface area of the porous carrier is typically 2,000 m²/g or less.

When the carbon dioxide adsorption layer includes the carbon dioxide adsorption material and the porous carrier, the content ratio of the total of the carbon dioxide adsorption material and the porous carrier in the carbon dioxide adsorption layer is, for example, 30 mass% or more, preferably 50 mass% or more, and is, for example, 100 mass% or less, preferably 99 mass% or less.

In this embodiment, the content ratio of the porous carrier in the carbon dioxide adsorption layer is, for example, 0.1 mass% or more, preferably 10 mass% or more, and is, for example, 70 mass% or less, preferably 50 mass% or less. In addition, the content ratio of the porous carrier is, for example, 0.01 part by mass or more, preferably 0.3 part by mass or more, and is, for example, 0.7 part by mass or less, preferably 0.5 part by mass or less with respect to 1 part by mass of the carbon dioxide adsorption material. When the content ratio of the porous carrier falls within the above-mentioned ranges, the carbon dioxide adsorption material can be more stably caused to adhere to the carbon dioxide adsorption layer in the adhesion step.

The carbon dioxide adsorption layer including the carbon dioxide adsorption material and the porous carrier is typically produced by the following method. First, a dispersion liquid of the above-mentioned porous carrier in which the porous carrier is dispersed in a dispersion medium is prepared as required, and the carbon dioxide adsorption material is added to the dispersion liquid. The dispersion medium is, for example, the same as the solvent described in the above-mentioned section B-2-1. Next, the dispersion liquid including the carbon dioxide adsorption material and the porous carrier is applied onto the base material (specifically, the partition wall), and the coating film is then dried, and is sintered as required. Thus, the carbon dioxide adsorption layer is formed.

Alternatively, a dispersion liquid including the carbon dioxide adsorption material except the ionic liquid and the porous carrier is applied onto the base material, and the coating film is then dried, and is sintered as required. After that, only the ionic liquid is applied to the base material. Thus, the carbon dioxide adsorption layer is formed.

A method of producing the carbon dioxide adsorption layer including the carbon dioxide adsorption material and the porous carrier is not limited to the above-mentioned method. For example, a dispersion liquid of the above-mentioned porous carrier in which the porous carrier is dispersed in a dispersion medium is prepared, and the dispersion liquid is applied onto the base material. After that, the coating film is dried, and is then heated at, for example, 400°C or more and 800°C or less to be sintered. Thus, a carrier-containing film is formed. After that, the carbon dioxide adsorption material in a liquid form under normal temperature and normal pressure, or a solution of the carbon dioxide adsorption material is applied to the carrier-containing film. Thus, the carbon dioxide adsorption material penetrates into and is supported by the porous carrier of the carrier-containing film. Thus, a carbon dioxide adsorption layer is formed.

### B-2-4. Carbon Dioxide Adsorption Layer including Carbon Dioxide-adsorbable Particles and Organic Binder

In another embodiment, the carbon dioxide adsorption layer includes: particles each including at least the above-mentioned carbon dioxide adsorption material; and an organic binder. The particles each including the above-mentioned carbon dioxide adsorption material each have a carbon dioxide adsorption ability, and are hereinafter referred to as "carbon dioxide-adsorbable particles." The organic binder is capable of binding the carbon dioxide-adsorbable particles, and is typically fixed to the base material. The organic binder is soluble in an aprotic polar solvent and substantially insoluble in a protic polar solvent. That is, the organic binder has resistance to water (water resistance), which is a protic polar solvent. The organic binder is substantially insoluble in the protic polar solvent and has water resistance, and hence, for example, swelling of the organic binder caused by water vapor in the atmosphere can be suppressed. Accordingly, the volume expansion and/or a reduction in strength of the organic binder can be suppressed. Besides, a structure in which the organic binder binds and retains the carbon dioxide-adsorbable particles can be prevented from being changed. As a result, an excellent carbon dioxide adsorption ability can be maintained irrespective of the usage environment.

The surface of the carbon dioxide adsorption layer on the opposite side to the base material preferably has a three-dimensional network structure or a porous lamellar structure. Accordingly, the acid gas such as carbon dioxide can be efficiently diffused from the surface of the carbon dioxide adsorption layer to an inside thereof. In particular, the organic binder has water resistance, and hence the carbon dioxide adsorption layer can stably maintain such microstructure on the surface thereof that can be brought into contact with the acid gas irrespective of the usage environment.

The carbon dioxide-adsorbable particles are each typically in a solid state under normal temperature and normal pressure (23°C, 0.1 MPa). The carbon dioxide adsorption layer includes a plurality of carbon dioxide-adsorbable particles. The carbon dioxide-adsorbable particles, under a state of being incorporated in the carbon dioxide adsorption layer, may be primary particles, or may be secondary particles in which a plurality of primary particles aggregate.

In one embodiment, the carbon dioxide-adsorbable particles each include: the above-mentioned carbon dioxide adsorption material; and a carrier for supporting the carbon dioxide adsorption material. However, in some cases, the carbon dioxide-adsorbable particles are each formed only of the carbon dioxide adsorption material, and the carrier is not included therein. That is, acid gas-adsorbable particles may be formed only of a carbon dioxide adsorption material that is a solid under normal temperature and normal pressure.

Of the carbon dioxide adsorption materials in the carbon dioxide-adsorbable particles, the above-mentioned nitrogen-containing compound is preferred, and the above-mentioned organic monomers having a primary amino group to a tertiary amino group, and the above-mentioned organic polymers having a primary amino group to a tertiary amino group are more preferred. The weight average molecular weight M_{w} (in terms of polystyrene) of the organic polymer is, for example, 1,000 or more, preferably 50,000 or more, and is, for example, 1,000,000 or less, preferably 300,000 or less.

In one embodiment, the carbon dioxide adsorption material in each of the carbon dioxide-adsorbable particles is substantially insoluble in the protic polar solvent (typically, water) and the aprotic polar solvent.

The solubility of the carbon dioxide adsorption material in water is, for example, 0.1 g/100 g-H₂O or less, preferably 0.05 g/100 g-H₂O or less. When the solubility of the carbon dioxide adsorption material in water is equal to or less than the above-mentioned upper limits, excellent water resistance can be stably imparted to the carbon dioxide adsorption device. The lower limit of the solubility of the carbon dioxide adsorption material in water is typically 0.01 g/100 g-H₂O or more.

The solubility of the carbon dioxide adsorption material in the aprotic polar solvent is, for example, 1 g/100 g-aprotic polar solvent or less, preferably 0.5 g/100 g-aprotic polar solvent or less. When the solubility of the carbon dioxide adsorption material in the aprotic polar solvent is equal to or less than the above-mentioned upper limits, the dissolution of the carbon dioxide adsorption material in the aprotic polar solvent can be suppressed at the time of the production of the carbon dioxide adsorption device. The lower limit of the solubility of the carbon dioxide adsorption material in the aprotic polar solvent is typically 0.01 g/100 g-aprotic polar solvent or more.

The solubility parameter of the carbon dioxide adsorption material is, for example, 7 or more, preferably 8 or more, and is, for example, 20 or less, preferably 15 or less. The solubility parameter may be calculated, for example, by a Hildebrand method.

Any appropriate carrier capable of supporting the carbon dioxide adsorption material may be adopted as the carrier. The carrier is preferably the above-mentioned porous carrier. In addition, from the viewpoint of thermal conductivity, a metal material may be adopted. Examples thereof include: iron and steel materials, such as carbon steel and alloy steel; and nonferrous metals, such as copper, aluminum, and nickel, and alloys thereof. In the case of the metal material, the shape of the carrier is not limited to a porous shape.

Any appropriate organic compound capable of binding the carbon dioxide-adsorbable particles may be adopted as the organic binder. The organic binder is soluble in the aprotic polar solvent and substantially insoluble in the protic polar solvent. Examples of the organic binder include: fluoropolymers, such as polyvinylidene fluoride (PVDF), polytetrafluoroethylene (PTFE), a perfluoroalkoxy alkane (PFA), a perfluoroethylene propene copolymer (FEP), and an ethylene tetrafluoroethylene copolymer (ETFE); and amorphous plastics such as polyethersulfone (PES). Those organic binders may be used alone or in combination thereof.

Of those organic binders, organic binders for each of which at least water is a poor solvent (organic binders each substantially insoluble in water) are preferred, fluoropolymers are more preferred, and polyvinylidene fluoride is still more preferred. When the organic binder includes the fluoropolymer (polyvinylidene fluoride), excellent heat resistance and excellent water resistance can be imparted to the carbon dioxide adsorption device.

The solubility of the organic binder in the protic polar solvent (typically, water) is, for example, 0.1 g/100 g-protic polar solvent or less, preferably 0.05 g/100 g-protic polar solvent or less. When the solubility of the organic binder in the protic polar solvent (typically, water) is equal to or less than the above-mentioned upper limits, excellent water resistance can be stably imparted to the acid gas adsorption device. The lower limit of the solubility of the organic binder in the protic polar solvent (typically, water) is typically 0.01 g/100 g-H₂O or more.

The solubility parameter of the organic binder is, for example, 9 or more, preferably 10 or more, and is, for example, 15 or less, preferably 13 or less.

The carbon dioxide adsorption layer may include any appropriate additive in addition to the carbon dioxide-adsorbable particles and the organic binder.

The total content ratio of the carbon dioxide-adsorbable particles and the organic binder in the carbon dioxide adsorption layer is, for example, 30 vol% or more, preferably 50 vol% or more, and is, for example, 100 vol% or less, preferably 99 vol% or less. The volume percentage may be measured, for example, through microstructure observation and elemental analysis.

The content ratio of the carbon dioxide-adsorbable particles in the carbon dioxide adsorption layer is, for example, 5 vol% or more, preferably 30 vol% or more. When the content ratio of the carbon dioxide-adsorbable particles is equal to or more than the above-mentioned lower limits, the carbon dioxide adsorption performance of the carbon dioxide adsorption device can be sufficiently ensured. The upper limit of the content ratio of the carbon dioxide-adsorbable particles is typically 85 vol% or less.

The content ratio of the organic binder in the carbon dioxide adsorption layer is, for example, 5 vol% or more, preferably 15 vol% or more. When the content ratio of the organic binder is equal to or more than the above-mentioned lower limits, the escape of the carbon dioxide-adsorbable particles from the carbon dioxide adsorption layer can be suppressed in the adsorption step and/or the desorption step described later. The upper limit of the content ratio of the organic binder is typically 70 vol% or less.

The carbon dioxide adsorption layer typically has pores communicating to each other. The porosity of the carbon dioxide adsorption layer 15 is, for example, 10% or more and 90% or less, preferably 10% or more and 60% or less, more preferably 15% or more and 40% or less.

The carbon dioxide adsorption layer including the carbon dioxide-adsorbable particles and the organic binder may be typically produced by the following method. First, a binder solution is prepared by dissolving the above-mentioned organic binder in an aprotic polar solvent.

The aprotic polar solvent can dissolve the above-mentioned organic binder therein and cannot dissolve the above-mentioned carbon dioxide-adsorbable particles (more specifically, the carbon dioxide adsorption material) therein.

Any appropriate organic solvent may be adopted as the aprotic polar solvent. Examples of the aprotic polar solvent include N-methyl-2-pyrrolidone (NMP), dimethylformamide (DMF), dimethylacetamide (DMA), dimethylsulfoxide (DMSO), and tetrahydrofuran (THF). Those aprotic polar solvents may be used alone or in combination thereof.

Of those aprotic polar solvents, N-methyl-2-pyrrolidone (NMP) is preferred. When the aprotic polar solvent includes NMP, the organic binder (particularly, PVDF) can be more smoothly dissolved therein, and the dissolution of the carbon dioxide adsorption material can be stably suppressed.

A solubility parameter distance between the organic binder and the aprotic polar solvent is, for example, 3 or less, preferably 2 or less. When the solubility parameter distance between the organic binder and the aprotic polar solvent is equal to or less than the above-mentioned upper limits, the organic binder can be smoothly dissolved in the aprotic polar solvent. The lower limit of the solubility parameter distance between the organic binder and the aprotic polar solvent is typically 0 or more.

A solubility parameter distance between the carbon dioxide adsorption material and the aprotic polar solvent is, for example, 2 or more, preferably 3 or more, more preferably 4 or more. When the solubility parameter distance between the carbon dioxide adsorption material and the aprotic polar solvent is equal to or more than the above-mentioned lower limits, the dissolution of the carbon dioxide adsorption material in the aprotic polar solvent can be suppressed. The upper limit of the solubility parameter distance between the carbon dioxide adsorption material and the aprotic polar solvent is typically 10 or less.

Next, the above-mentioned carbon dioxide-adsorbable particles are added to be dispersed in the binder solution.

A solution of the organic binder in the aprotic polar solvent in which the carbon dioxide-adsorbable particles are dispersed (particle-dispersed binder solution) is applied to the surface of the base material by any appropriate method in the same manner as described above.

Thus, the particle-dispersed binder solution is applied to the surface of the base material (typically, the surface of the partition wall) to form a precursor film. The precursor film includes the above-mentioned carbon dioxide-adsorbable particles, the above-mentioned organic binder, and the above-mentioned aprotic polar solvent.

Next, the aprotic polar solvent in the precursor film is replaced with a poor solvent for the organic binder.

The poor solvent dissolves the organic binder therein to a smaller extent than the above-mentioned aprotic polar solvent (good solvent), and the organic binder is substantially insoluble in the poor solvent. A solubility parameter distance between the organic binder and the poor solvent is typically larger than the solubility parameter distance between the organic binder and the aprotic polar solvent (good solvent). The solubility parameter distance between the organic binder and the poor solvent is, for example, 2 or more, preferably 3 or more, more preferably 4 or more.

Examples of the poor solvent include: protic polar solvents, such as water and alcohols including ethanol, butanol, and isopropyl alcohol (IPA); and fluorocarbons, such as hydrochlorofluorocarbons (HCFC), hydrofluorocarbons (HFC), and hydrofluoroolefins (HFO). Those poor solvents may be used alone or in combination thereof. Of those poor solvents, water is preferred.

Through replacement of the aprotic polar solvent, a film stable for a protic solvent is obtained.

Thus, the carbon dioxide adsorption layer including the carbon dioxide-adsorbable particles and the organic binder can be formed on the surface of the base material (typically, the surface of the partition wall). After that, the carbon dioxide adsorption layer is dried as required.

In addition, a method of forming the carbon dioxide adsorption layer including the carbon dioxide-adsorbable particles and the organic binder is not limited to the above-mentioned embodiment. For example, first, a binder solution is prepared in the same manner as described above. Next, the above-mentioned porous carrier is added to be dispersed in the binder solution.

Thus, the porous carrier is dispersed in the binder solution, and hence a binder solution in which the porous carrier is dispersed (carrier-dispersed binder solution) is prepared.

Next, the carrier-dispersed binder solution is applied to the surface of the base material by the above-mentioned application method. Thus, the carrier-dispersed binder solution is applied to the surface of the base material (typically, the surface of the partition wall) to form a precursor film. The precursor film includes the above-mentioned porous carrier, the above-mentioned organic binder, and the above-mentioned aprotic polar solvent.

Next, the aprotic polar solvent in the precursor film is replaced with the above-mentioned poor solvent.

Thus, a carrier-containing film is formed on the surface of the base material (typically, the surface of the partition wall). After that, the carrier-containing film is dried as required. The carrier-containing film includes the above-mentioned porous carrier and the above-mentioned organic binder.

Next, the above-mentioned carbon dioxide adsorption material is supported by the porous carrier in the carrier-containing film. The carbon dioxide adsorption material to be used in this embodiment is preferably in a liquid form under normal temperature and normal pressure. More specifically, the carbon dioxide adsorption material in a liquid form under normal temperature and normal pressure is applied to the carrier-containing film by the above-mentioned application method. Thus, the carbon dioxide adsorption material penetrates into and is supported by the porous carrier of the carrier-containing film. Thus, the carbon dioxide-adsorbable particles each including an acid gas adsorption compound and the porous carrier are formed. That is, the carbon dioxide adsorption layer includes the carbon dioxide-adsorbable particles and the organic binder.

The carbon dioxide adsorption layer including the carbon dioxide-adsorbable particles and the organic binder may be formed in this manner.

Such carbon dioxide adsorption device 100 may be included in carbon dioxide adsorption equipment, though the equipment is not shown. In one embodiment, the carbon dioxide adsorption equipment includes: a plurality of carbon dioxide adsorption devices; a fan for supplying a gas including CO₂ (CO₂-containing gas) to the carbon dioxide adsorption layer; and a pump for sucking CO₂ separated from the carbon dioxide adsorption layer.

### C. Adsorption Step and Desorption Step

As described above, the method of regenerating a carbon dioxide adsorption device according to one embodiment includes: an adsorption step of causing CO₂ to be adsorbed to the carbon dioxide adsorption material in the carbon dioxide adsorption device **100;** and a desorption step of causing CO₂ to be desorbed from the carbon dioxide adsorption material.

In the adsorption step, a CO₂-containing gas is typically caused to flow through the gas flow passage **16** so that CO₂ is brought into contact with the carbon dioxide adsorption layer **15.** In one embodiment, the CO₂-containing gas is air (atmosphere). The concentration of CO₂ in the CO₂-containing gas is, for example, 100 ppm or more and 2 vol% or less. The CO₂-containing gas typically includes nitrogen in addition to CO₂. The temperature of the CO₂-containing gas in the adsorption step is, for example, 0°C or more and 40°C or less. The pressure of the CO₂-containing gas in the adsorption step is, for example, 0.3×10⁵ Pa or more and 2.0×10⁵ Pa or less. The relative humidity RH of the CO₂-containing gas in the adsorption step is, for example, 10%RH or more and 60%RH or less. The operation time period of the adsorption step is, for example, 15 minutes or more and 3 hours or less. The flow rate of the CO₂-containing gas in the adsorption step is, for example, 0.5 m/sec or more and 5 m/sec or less.

Thus, the carbon dioxide adsorption material present so as to face the gas flow passage **16** adsorbs CO₂. The CO₂ capture rate in the adsorption step (=100-(concentration of CO₂ in gas having passed through gas flow passage/concentration of CO₂ in gas before flowing into gas flow passage×100)) is, for example, 80% or more, preferably 85% or more, more preferably 90% or more, and is, for example, 100% or less.

The desorption step (sometimes referred to as "detachment step") is performed after the adsorption step. In the desorption step, typically, the carbon dioxide adsorption device is heated, and CO₂ thus separated is captured through suction with, for example, a pump. Alternatively, CO₂ having been captured is loaded in the carbon dioxide adsorption device again, the carbon dioxide adsorption device is heated, and CO₂ thus separated is captured.

The temperature in the desorption step is, for example, more than 40°C, preferably 70°C or more, and is, for example, 200°C or less, preferably 110°C or less. The operation time period of the desorption step is, for example, 1 minute or more and 1 hour or less.

Thus, CO₂ retained by the carbon dioxide adsorption material is desorbed (released, detached) from the carbon dioxide adsorption material. Accordingly, CO₂ can be captured, and can be utilized in various applications (e.g., methanation).

The adsorption step and the desorption step are preferably performed repeatedly. In one embodiment, a cycle of the adsorption step and the desorption step is performed, for example, 10 times or more, preferably 30 times or more, more preferably 50 times or more, still more preferably 100 times or more.

### D. Adhesion Step

In one embodiment, after the adsorption step and the desorption step are performed (preferably, the cycle of the adsorption step and the desorption step is performed within the above-mentioned ranges), the adhesion step is performed. In addition, the adhesion step may be performed after the CO₂ capture rate in the adsorption step becomes smaller than the above-mentioned lower limits.

A pretreatment step of removing impurities adhering to the carbon dioxide adsorption device may be performed after the adsorption step and the desorption step and before the adhesion step. When the pretreatment step is performed, impurities (e.g., dirt and dust adhering to the surface of the carbon dioxide adsorption layer) in the carbon dioxide adsorption device are removed before the adhesion step, and hence a fresh carbon dioxide adsorption material can be uniformly applied to the carbon dioxide adsorption layer in the subsequent adhesion step.

As a method for the pretreatment, there are given, for example, a method including passing a larger amount of air than that of the CO₂-containing gas in the above-mentioned adsorption step through the gas flow passage, and a method including passing water vapor through the gas flow passage.

In the adhesion step, a fresh carbon dioxide adsorption material is supplied to the carbon dioxide adsorption layer **15** of the carbon dioxide adsorption device **100** having been subjected to the adsorption step and the desorption step to be caused to adhere thereto (supported thereon). The carbon dioxide adsorption material to be supplied in the adhesion step may be identical to or different from the carbon dioxide adsorption material in the carbon dioxide adsorption layer **15.** The carbon dioxide adsorption material to be supplied in the adhesion step is preferably identical to the carbon dioxide adsorption material in the carbon dioxide adsorption layer **15.**

Any appropriate method may be adopted as a method of supplying the carbon dioxide adsorption material in accordance with the material of the base material and the kind of the carbon dioxide adsorption material. Examples of the supply method include: a method including applying the solution of the carbon dioxide adsorption material to the carbon dioxide adsorption layer by spray coating (spray coating method); a method including immersing the carbon dioxide adsorption device in the solution of the carbon dioxide adsorption material (wash coating method); a method including flowing the solution of the carbon dioxide adsorption material into the gas flow passage of the carbon dioxide adsorption device (flow method); and a method including applying the carbon dioxide adsorption material to the carbon dioxide adsorption layer by electrostatic coating (electrostatic coating method) .

Those methods of supplying the carbon dioxide adsorption material are each preferably performed by arranging the carbon dioxide adsorption device so that one end (inlet) of the gas flow passage is positioned above the other end (outlet) thereof. Thus, the carbon dioxide adsorption material to be supplied actively drops by gravity, and hence the carbon dioxide adsorption material can be uniformly applied to the carbon dioxide adsorption layer. Accordingly, the carbon dioxide adsorption performance of the carbon dioxide adsorption device after regeneration can be improved.

### D-1. Spray Coating Method

When the adhesion step is performed by the spray coating method, the carbon dioxide capture performance of the carbon dioxide adsorption device can be recovered on-site without removal of the carbon dioxide adsorption device from the carbon dioxide adsorption equipment (not shown). Accordingly, a replacement work of the carbon dioxide adsorption device is not required, and hence maintenance cost for the carbon dioxide adsorption equipment can be reduced. When the thickness of the carbon dioxide adsorption layer is 1 mm or less, the spray coating method is preferably selected in the adhesion step.

In the spray coating method, first, the solution of the carbon dioxide adsorption material is atomized (formed into mist) to be applied to the carbon dioxide adsorption layer. Thus, the solution of the carbon dioxide adsorption material is applied to the surface of the carbon dioxide adsorption layer. After that, the coating film is dried at, for example, 20°C or more and 200°C or less as required.

The solution of the carbon dioxide adsorption material is typically prepared by dissolving the above-mentioned carbon dioxide adsorption material in a solvent. Examples of the solvent include water, alcohols, and diols. Of those, a water-based solvent (water or a mixed solvent containing water) is preferred. Those solvents may be used alone or in combination thereof. The concentration of the carbon dioxide adsorption material in the solution of the carbon dioxide adsorption material is, for example, 0.1 mass% or more, preferably 5.0 mass% or more, and is, for example, 50 mass% or less, preferably 30 mass% or less.

As a spray mode, there are given, for example, an air spray mode and an ultrasonic spray mode. Of those, an air spray method is preferred. The application amount of the solution of the carbon dioxide adsorption material is typically such an application amount that the thickness of the carbon dioxide adsorption material to be applied by the spray coating method becomes 1 mm or less, preferably 0.1 mm or less.

### D-2. Wash Coating Method

When the adhesion step is performed by the wash coating method, while the wash coating method is a simple method, the carbon dioxide capture performance can be smoothly recovered. When the thickness of the carbon dioxide adsorption layer is 0.1 mm or more, and a uniform thickness is required in the length direction of the adsorption device, the wash coating method is preferably selected in the adhesion step.

In the wash coating method, first, the carbon dioxide adsorption device is immersed in the solution of the carbon dioxide adsorption material. Thus, the solution of the carbon dioxide adsorption material adheres to the surface of the carbon dioxide adsorption layer. After that, the carbon dioxide adsorption device is taken out of the solution of the carbon dioxide adsorption material, and is dried at, for example, 20°C or more and 200°C or less as required.

The solution of the carbon dioxide adsorption material is, for example, the same as the solution of the carbon dioxide adsorption material described in the above-mentioned section D-1. An immersion time period is typically 10 minutes or more and 24 hours or less, and is such an immersion time period that the thickness of the carbon dioxide adsorption material to be applied by the wash coating method becomes 0.01 mm or more, preferably 0.1 mm or more.

### D-3. Flow Method

When the adhesion step is performed by the flow method, in the same manner as in the above-mentioned spray coating method, the carbon dioxide capture performance of the carbon dioxide adsorption device can be recovered on-site, and hence maintenance cost for the carbon dioxide adsorption equipment can be reduced.

When the thickness of the carbon dioxide adsorption layer is 0.1 mm or more, the flow method is preferably selected in the adhesion step.

In the flow method, first, the solution of the carbon dioxide adsorption material is flowed into the gas flow passage of the carbon dioxide adsorption device. Thus, the solution of the carbon dioxide adsorption material is applied to the surface of the carbon dioxide adsorption layer. After that, the coating film is dried at, for example, 20°C or more and 200°C or less as required.

The solution of the carbon dioxide adsorption material is, for example, the same as the solution of the carbon dioxide adsorption material described in the above-mentioned section D-1. The flow rate of the solution of the carbon dioxide adsorption material is typically such a flow rate that the thickness of the carbon dioxide adsorption material to be applied by the flow method becomes 0.01 mm or more, preferably 0.1 mm or more.

### D-4. Electrostatic Coating Method

When the adhesion step is performed by the electrostatic coating method, the yield of the solution of the carbon dioxide adsorption material to be applied is high, and hence cost for a coating material can be reduced. When the thickness of the carbon dioxide adsorption layer is 1 mm or less, and a uniform thickness is required, the electrostatic coating method is preferably selected in the adhesion step. The application amount of the solution of the carbon dioxide adsorption material is typically such an application amount that the thickness of the carbon dioxide adsorption material to be applied by the electrostatic coating method becomes 1 mm or less, preferably 0.1 mm or less.

### D-5. Particle Supply Method

The carbon dioxide-adsorbable particles may be supplied to the carbon dioxide adsorption layer with the organic binder (particle supply method). According to this method, the carbon dioxide capture performance of the carbon dioxide adsorption device can be recovered on-site, and hence maintenance cost for the carbon dioxide adsorption equipment can be reduced.

In the particle supply method, first, a dispersion liquid of the carbon dioxide-adsorbable particles is flowed into the gas flow passage of the carbon dioxide adsorption device. Next, a protic polar solvent (typically, water) is flowed into the gas flow passage. Thus, the carbon dioxide-adsorbable particles are supplied to the surface of the carbon dioxide adsorption layer, and hence the carbon dioxide-adsorbable particles adhere to the organic binder facing the gas flow passage. After that, the carbon dioxide adsorption layer is dried as required.

As described above, the carbon dioxide adsorption device 100 is regenerated. Such method of regenerating a carbon dioxide adsorption device (acid gas adsorption device) is, in other words, a method of producing a carbon dioxide adsorption device (acid gas adsorption device) including a carbon dioxide adsorption layer (acid gas adsorption layer) whose performance is recovered. The method of producing a carbon dioxide adsorption device (acid gas adsorption device) includes: the above-mentioned adsorption step; the above-mentioned desorption step; and the above-mentioned adhesion step. A carbon dioxide adsorption device having excellent CO₂ capture performance (acid gas capture performance) can be produced by such method of producing a carbon dioxide adsorption device (acid gas adsorption device).

### E. Method of operating Carbon Dioxide Adsorption Device

In the above-mentioned embodiment, the adhesion step is performed after the adsorption step and the desorption step are performed, but the adhesion step may also be performed simultaneously with the adsorption step. As described above, a method of operating a carbon dioxide adsorption device (acid gas adsorption device) includes: the above-mentioned adsorption step; and the above-mentioned desorption step. In the adsorption step, the carbon dioxide adsorption material (acid gas adsorption material) is supplied to the carbon dioxide adsorption layer (acid gas adsorption layer) together with CO₂ (acid gas) to adhere thereto. When the adhesion step and the adsorption step are simultaneously performed, excellent performance of the carbon dioxide adsorption device (acid gas adsorption device) can be maintained without separate performance of maintenance of the carbon dioxide adsorption device (acid gas adsorption device).

More specifically, in the adsorption step, the solution of the carbon dioxide adsorption material is sprayed on the CO₂-containing gas to be flowed into the gas flow passage to cause the CO₂-containing gas to be accompanied by the solution of the carbon dioxide adsorption material in airborne droplets. Thus, at the time when the CO₂-containing gas passes through the gas flow passage, droplets of the solution of the carbon dioxide adsorption material adhere to the surface of the carbon dioxide adsorption layer, and hence a fresh carbon dioxide adsorption material is supplied to the carbon dioxide adsorption layer. Accordingly, a reduction in CO₂ capture performance in accordance with the repetition of the adsorption step and the desorption step can be suppressed.

The solution of the carbon dioxide adsorption material is, for example, the same as the solution of the carbon dioxide adsorption material described in the above-mentioned section D-1. A method of spraying the solution of the carbon dioxide adsorption material is, for example, the same as the spray mode described in the above-mentioned section D-1.

In addition, in the adsorption step, the CO₂-containing gas to be flowed into the gas flow passage may be caused to be accompanied by the carbon dioxide-adsorbable particles in a powdered state or a dispersion liquid obtained by dispersing the carbon dioxide-adsorbable particles in an aprotic solvent. According to this method, at the time when the CO₂-containing gas passes through the gas flow passage, the carbon dioxide-adsorbable particles adhere to the organic binder on the surface of the carbon dioxide adsorption layer. Accordingly, fresh carbon dioxide-adsorbable particles can be supplied to the carbon dioxide adsorption layer.

### Industrial Applicability

The method of regenerating an acid gas adsorption device according to the embodiment of the present invention can be used for regeneration of an acid gas adsorption device to be used for separation and capture of an acid gas, and particularly, can be suitably used for regeneration of a carbon dioxide adsorption device to be used for a Carbon dioxide Capture, Utilization and Storage (CCUS) cycle.

### Reference Signs List

**10** honeycomb-like base material
**13** partition wall
**14** cell
**15** carbon dioxide adsorption layer
**100** carbon dioxide adsorption device

## Claims

1. A method of regenerating an acid gas adsorption device, comprising the steps of:
causing an acid gas to be adsorbed to an acid gas adsorption material by supplying the acid gas to an acid gas adsorption device including a base material, and an acid gas adsorption layer arranged on a surface of the base material, the acid gas adsorption layer including the acid gas adsorption material, so that the acid gas is brought into contact with the acid gas adsorption layer;
causing the acid gas to be desorbed from the acid gas adsorption material; and
causing an acid gas adsorption material to adhere to the acid gas adsorption layer of the acid gas adsorption device, which has been subjected to the step of causing the acid gas to be adsorbed and the step of causing the acid gas to be desorbed, by supplying the acid gas adsorption material thereto.

2. The method of regenerating an acid gas adsorption device according to claim 1, wherein the acid gas is carbon dioxide.

3. The method of regenerating an acid gas adsorption device according to claim 1,
wherein the base material is a honeycomb-like base material including a partition wall configured to define a plurality of cells, and
wherein the acid gas adsorption layer is formed on a surface of the partition wall.

4. The method of regenerating an acid gas adsorption device according to claim 1, wherein a material for forming the base material is selected from cordierite, alumina, mullite, silicon carbide, a silicon-silicon carbide-based composite material, silicon nitride, and a combination thereof.

5. The method of regenerating an acid gas adsorption device according to claim 1, wherein the acid gas adsorption material is selected from a nitrogen-containing compound, a metal organic framework, activated carbon, nitrogen-doped carbon, an alkali compound, a carbonate salt, a hydrogen carbonate salt, zeolite, an ionic liquid, and a combination thereof.

6. The method of regenerating an acid gas adsorption device according to claim 1, wherein the acid gas adsorption layer further includes a porous carrier.

7. The method of regenerating an acid gas adsorption device according to claim 1,
wherein the acid gas adsorption layer includes: particles each including at least the acid gas adsorption material; and an organic binder capable of binding the particles,
wherein the organic binder is soluble in an aprotic polar solvent and substantially insoluble in a protic polar solvent, and
wherein the step of causing the acid gas adsorption material to adhere to the acid gas adsorption layer by supplying the acid gas adsorption material thereto includes supplying the particles each including at least the acid gas adsorption material to the acid gas adsorption layer.

8. A method of producing an acid gas adsorption device, comprising the steps of:
causing an acid gas to be adsorbed to an acid gas adsorption material by supplying the acid gas to an acid gas adsorption device including a base material, and an acid gas adsorption layer arranged on a surface of the base material, the acid gas adsorption layer including the acid gas adsorption material, so that the acid gas is brought into contact with the acid gas adsorption layer;
causing the acid gas to be desorbed from the acid gas adsorption material; and
causing an acid gas adsorption material to adhere to the acid gas adsorption layer of the acid gas adsorption device, which has been subjected to the step of causing the acid gas to be adsorbed and the step of causing the acid gas to be desorbed, by supplying the acid gas adsorption material thereto.

9. A method of operating an acid gas adsorption device, comprising the steps of:
causing an acid gas to be adsorbed to an acid gas adsorption material by supplying the acid gas to an acid gas adsorption device including a base material, and an acid gas adsorption layer arranged on a surface of the base material, the acid gas adsorption layer including the acid gas adsorption material, so that the acid gas is brought into contact with the acid gas adsorption layer; and
causing the acid gas to be desorbed from the acid gas adsorption material,
wherein the step of causing the acid gas to be adsorbed to the acid gas adsorption material includes causing an acid gas adsorption material to adhere to the acid gas adsorption layer by supplying the acid gas adsorption material thereto together with the acid gas.
